# EUROPÄISCHE PATENTSCHRIFT

(11) **EP 4 325 090 B1**
(45) Veröffentlichungstag und Bekanntmachung des Hinweises auf die Patenterteilung: **01.07.2026**
(21) Anmeldenummer: 23218919.1
(22) Anmeldetag: 07.04.2014
(51) Int. Cl.: F16H 25/20, F16H 55/08

(54) **GLEITGEWINDETRIEB MIT ASYMMETRISCHEM INNEN- UND AUSSENGEWINDE**
LEAD SCREW DRIVE WITH ASYMMETRICAL INTERNAL AND EXTERNAL THREAD
ENTRAINEMENT A VIS COULISSANT AVEC FILETAGES INTERIEUR ET EXTERIEUR ASYMETRIQUES

(43) Veröffentlichungstag der Anmeldung: 21.02.2024
(62) Teilanmeldung aus: 14715338.1
(73) Patentinhaber: igus SE & Co. KG, 51147 Köln (DE)
(72) Erfinder: Jaekel, Marco, 51465 Bergisch Gladbach (DE); Niermann, Stefan, 40882 Ratingen (DE)
(74) Vertreter: Lippert Stachow Patentanwälte Rechtsanwälte

(56) Entgegenhaltungen:
- EP-A1- 1 609 755
- EP-A1- 2 581 209
- EP-A2- 1 058 031
- EP-A2- 2 003 370
- DE-B4- 10 362 326

## Beschreibung

Die Erfindung betrifft allgemein einen Gleitgewindetrieb bzw. Gleitgewindeantrieb zur Umsetzung einer Drehbewegung in eine Längsbewegung oder umgekehrt. Die Erfindung betrifft insbesondere einen Gleitgewindetrieb mit einer Spindel und einer Spindelmutter, wobei zumindest das Innengewinde der Spindelmutter oder vorzugsweise die gesamte Spindelmutter aus Kunststoff gefertigt ist und das Außengewinde der Spindel eine höhere Festigkeit aufweist als das Innengewinde aus Kunststoff.

Bei Gewindetrieben wird zwischen Wälzgewindetrieben, wie beispielsweise Kugelgewindetrieben mit Kugeln als Wälzkörpern, und sogenannten konventionellen Gleitgewindetrieben unterschieden. Die vorliegende Erfindung betrifft Gleitgewindetriebe. Es ist bekannt bei solchen Gleitgewindetrieben auf einer Spindel mit hoher Festigkeit, beispielsweise aus Stahl, eine Spindelmutter aus Kunststoff zu verwenden. Ein derartiger Gleitgewindetrieb ist beispielsweise aus der Offenlegungsschrift DE 2300851 vorbekannt.

Gleitgewindetriebe mit Spindelmuttern aus Kunststoff bieten insbesondere den Vorteil, dass sie sehr wartungsarm, insbesondere schmiermittelfrei, betrieben werden können.

Die EP 2 581 209 A1 beschreibt einen solchen Gleitgewindetrieb, speziell zum Betreiben eines Presskolbens, bei welchem Innen- und Außengewinde zueinander asymmetrisch, d.h. mit verschiedenen Geometrien ausgeführt sind. Beim Spindeltrieb gemäß EP 2 581 209 A1 sind die Flanken des Innengewindes der Spindelmutter bezüglich einer Radialebene nicht spiegelsymmetrisch, sondern asymmetrisch ausgebildet. Hierbei weist eine Rückholflanke gegenüber der Arbeitsflanke einen deutlich flacheren Winkel auf, wodurch die Spindelmutter höhere Kräfte in einer Antriebsrichtung aufnehmen kann, da das Gewinde am Zahnfuß der Spindelmutter eine bessere Abstützung erfährt. Durch diese Gestaltung soll auch bei hohen Belastungen, wo bisher üblicherweise Stahl als Material für die Spindelmutter notwendig war, Kunststoff als Material für die Spindelmutter eingesetzt werden können. In Anbetracht dieser Zielsetzung wird die EP 2 581 209 A1 als nächstliegender Stand der Technik betrachtet.

Zum Stand der Technik gehört auch ein Gewindetrieb wie in EP 2 003 370 A2 offenbart. Hierbei ist bei normaler Temperatur die Steigung der Mutter etwas größer als die Steigung der Spindel. Da das Gewinde der Mutter gemäß EP 2 003 370 A2, mit einem geringen Übermaß auf das Gewinde der Spindel gepresst wird, besteht kein Umkehrspiel (Engl. backlash) zwischen Spindel und Mutter, und bei einer niedrigen Temperatur zieht sich die Mutter stärker zusammen als die Spindel, wodurch dann die Steigung der Mutter im Wesentlichen gleich der Steigung der Spindel ist.

Ausgehend vom vorgenannten Stand der Technik ist es eine Aufgabe der vorliegenden Erfindung, einen Gleitgewindetrieb mit einer Spindelmutter, welche vollständig oder zumindest im Bereich ihres Innengewindes aus Kunststoff gefertigt ist, vorzuschlagen, welche eine höhere Lebensdauer bietet und für eine größere Vielzahl von Anwendungen geeignet ist. Es soll ebenfalls eine entsprechend geeignete Spindelmutter für einen solchen Gleitgewindetrieb vorgeschlagen werden.

Die vorgenannte Aufgabe löst ein Gleitgewindetrieb nach Anspruch 1.

Gemäß der Erfindung weist das Innengewinde der Spindelmutter einen Gewindequerschnitt dergestalt auf, dass die zum Eingriff in den Gewindegang der Spindel bestimmte Profilschnittfläche der Gewindewendel messbar größer ist als die freie Gangschnittfläche des Gewindegangs der Spindelmutter, oder - alternativ ausgedrückt - messbar größer ist als die darin eingreifende Profilschnittfläche der Gewindewendel bzw. Verzahnung des Außengewindes der Spindel.

Anhand der spürbar größeren Abmessung der Gewindewendeln der Spindelmutter im Vergleich zu den Gewindewendeln der Spindel kann eine deutlich höhere Axiallast bei gleich starkem Kunststoff aufgenommen werden, bzw. es kann Kunststoff eingesetzt werden, wo bisher Spindelmuttern aus Metall nötig gewesen sind.

Die als Profilschnittflächen bezeichneten Schnittflächen sind hierbei Querschnittsflächen betrachtet in einem Längsschnitt durch die zentrale Längsachse der Spindelmutter bzw. der Spindel, was dem schematisierten Profilschnitt entspricht. Die Profilschnittfläche bezeichnet die in dieser Ebene betrachtete Schnittfläche der Gewindewendel bzw. Verzahnung der Spindelmutter, gemessen zwischen einer Parallelen zur Längsachse am Gewindefuß und dem Scheitel bzw.

Scheitelpunkt. Die Gangschnittfläche bezeichnet die entsprechend betrachtete freie Fläche des Gewindegangs des Spindelmutter-Gewindes, in welche die Gewindewendel bzw. Verzahnung des Außengewindes der Spindel eingreift.

Eine erste Ausführungsform der Erfindung kann in die Praxis umgesetzt werden, indem man von einer herkömmlichen Gestaltung eines Spindeltriebs mit symmetrischer Verzahnung ausgeht und bei der Spindel beispielsweise Gewindewendel um ca. 10-35% schmaler und Gewindegang um ca. 10-35% breiter als bei symmetrischer Ausführung gestaltet. Entsprechend umgekehrt ist bei der Gestaltung der Spindelmutter vorzugehen, **d.h.** bei der Spindelmutter beispielsweise Gewindewendel um ca. 10-35% breiter und Gewindegang um ca. 10-35% schmaler als bei symmetrischer Ausführung gestaltet wird.

In einer Ausführungsform der Erfindung ist die Profilschnittfläche des Innengewindes der Spindelmutter um einen Faktor von mindestens 1,2 größer als die freie Gangschnittfläche des Innengewindes. Die Gangschnittfläche bezeichnet die freie Fläche des Gewindegangs, in welche die Gewindewendel bzw. Verzahnung des Außengewindes der Spindel eingreift. Vorliegend ist unter Gewindegang die Aussparung des Gewindes bzw. die Gewinderille zu verstehen und nicht etwa die Gewindewendel bzw. Verzahnung.

In einer weiteren Ausführungsform der Erfindung ist vorgesehen, dass die positive Profilschnittfläche ein Flächenmaß hat, das im Bereich des 1,2-fachen bis 2-fachen, besonders bevorzugt im Bereich des 1,25-fachen bis 1,4-fachen des korrespondierenden Flächenmaßes der Gangschnittfläche aufweist. Hierdurch können auch mit zumindest im Bereich des Innengewindes aus Kunststoff hergestellten Spindelmuttern mit hoher Lebensdauer und zugleich beachtlicher zulässiger Axiallast hergestellt werden.

Zur Steigerung der Anwendungsmöglichkeiten ist es vorteilhaft, wenn die gegenüberliegenden Flanken im Profilschnitt (in der Profilskizze) des Innengewindes der Spindelmutter bezüglich einer Radialebene (senkrecht zur Längsachse) spiegelsymmetrisch ausgeführt sind. Besonders bevorzugt wird ein für Bewegungsgewinde recht großer Flankenwinkel im Bereich von 30° bis 70° vorgesehen, insbesondere im Bereich von 45° bis 70° vorgesehen. Unter Flankenwinkel wird hierbei der Winkel von einer Gewindeflanke zu der gegenüberliegenden Gewindeflanke verstanden. Durch entsprechend optimierte Flankenwinkel lässt sich ein höherer Wirkungsgrad erzielen, wobei zugleich in beide Translationsrichtungen, d.h. unabhängig vom Rotationssinn, hohe Belastungen erzielbar sind.

Zur Vermeidung von Vibrationen und unerwünschter Geräuschentwicklung ist es vorteilhaft, wenn die Übergänge von Flanke zu Gewindescheitel und von Flanke zu Gewindefuß gerundet ausgeführt sind. Dies gilt insbesondere für das Innengewinde der Spindelmutter, jedoch vorteilhafterweise ebenfalls für das Außengewinde der Spindel.

Bei entsprechend gerundeten Übergängen an der Spindelmutter ist es vorteilhaft, wenn diese einen Gewindequerschnitt aufweist, dessen Gewindescheitel zwischen beiden Flanken einer Gewindewendel durchgehend gerundet sind. So lässt sich anstelle des üblichen Flächenkontakts ein Punktkontakt der Gewindescheitel erzielen, was ebenfalls vibrationsmindernd und geräuschmindernd wirkt. In der Praxis vorteilhaft ist, zumindest für die Gewindescheitel der Spindelmutter, ein Rundungsradius im Bereich des 0,1-fachen bis 0,5-fachen Wertes des Quotienten aus Gewindesteigung geteilt durch die Anzahl n der Gewindegänge (n > 1 bei mehrgängigen Spindeln) . Eine durchgehende Rundung kann ebenfalls am Außengewinde der Spindel vorgesehen sein, wobei hier jedoch aufgrund des deutlich schmaleren Gewindefußes auch um einen entsprechend eingangs genannten Faktor reduzierten Krümmungsradius zweckmäßig ist.

Bei entsprechend gerundeter Zahngeometrie ist es vorteilhaft, wenn die Spindelmutter ein Innengewinde mit einer Gewindetiefe aufweist, welche geringer ist als die Gewindetiefe des Außengewindes an der Spindel. Auf diese Weise kann erreicht werden, dass auch bei einem ungewollten Schräglauf lediglich ein minimaler Kontakt (Punktkontakt im Längsschnitt) zwischen den Gewindescheiteln des Außengewindes und dem Grund der Gewinderille (Rillengrund) am Spindelkern entsteht. Ein Kontakt zwischen den Gewindescheiteln des Innengewindes und dem Rillengrund am Kern des Außengewindes findet so jedenfalls nicht statt, auch nicht bei unerwünschten Querbelastungen oder Verformungen.

Zweckmäßig wird die Spindelmutter aus einem technischen Kunststoff hergestellt. Besonders bevorzugt wird die Spindelmutter aus einem technischen Kunststoff, spritzgussfähigen, vorzugsweise schmierfreien Hochleistungspolymer, insbesondere mit Füll- und/oder Verstärkungsstoffen zur Verbesserung der Dauerfestigkeit und Verminderung der Reibungskoeffizienten hergestellt.

In besonders bevorzugter Ausführungsform wird die Spindelmutter als einstückiges Teil hergestellt. Dies kann z.B. vorzugsweise in einem Arbeitsgang vollständig im Spritzgussverfahren erfolgen, d.h. die Spindelmutter wird komplett mit dem Muttergewinde gegossen, oder aber durch spanabhebendes Bearbeiten eines Rohlings der gegossen oder extrudiert hergestellt ist. Gegebenenfalls kann in beiden Fällen im Bereich des Innengewindes spanend bzw. spanabhebend nachbearbeitet werden, z.B. durch ab- bzw. ausdrehen. Auch eine Herstellung in zwei nachträglich zusammengefügten Halbschalen ist denkbar und in Spritzgusstechnik leichter realisierbar. Eine einstückige Spindelmutter erreicht jedoch im Vergleich ohne besondere Maßnahmen eine hohe Präzision.

Gemäß der Erfindung sind die Spindel **und** die Spindelmutter jeweils mehrgängig, um die Belastbarkeit zu erhöhen. Durch eine einstückige Herstellung aus Kunststoff ist es technisch mit relativ geringem Aufwand möglich, Spindelmuttern mit einem dreigängigen, viergängigen, fünfgängigen, usw. bis hin zu einer hohen Anzahl Gewindegängen, z.B. einem zwanziggängigen Innengewinde, herzustellen. Die vorgeschlagene Spindelmutter bzw. der vorgeschlagene Gleitgewindetrieb eignet sich insbesondere für Übersetzung im Bereich von 1:10 bis 2:1. Entsprechend werden Innen- und Außengewinde zweckmäßig mit Nenndurchmessern (=Außendurchmesser beim Außengewinde) im Bereich von 3-30mm und Steigungen im Bereich von 1-200mm, insbesondere 2,5-100mm hergestellt. In diesem Zusammenhang ist anzumerken, dass der Flankendurchmesser aufgrund der ungleichen Abmessung nicht auf der Höhe liegt, auf welcher von Gewinderille und Gewindezahn gleiche Breite haben. Vereinfacht kann der Mittelwert zwischen Kerndurchmesser und Nenndurchmesser als Flankendurchmesser zur Berechnung der Steigung angesetzt werden.

Die Spindel an und für sich kann als eine rein metallische Spindel, beispielsweise aus einem nicht rostenden Cr-Mi-Stahl oder aus Aluminium hergestellt sein. Ebenfalls im Rahmen der Erfindung liegt jedoch eine reine Kunststoffspindel, insbesondere eine Spindel aus einem Kunststoff mit höherer Festigkeit als der des Kunststoffs des Innengewindes der Spindelmutter bzw. der Spindelmutter insgesamt. Ferner liegt es im Rahmen der Erfindung, eine Kunststoff- oder Metallspindel, z.B. zur Verbesserung von Verschleißfestigkeit und/oder Optimierung von Reibungswerten, mit einer geeigneten Beschichtung zu versehen.

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
- FIG.1: ein Perspektivschema eines Abschnitts eines Gleitgewindetriebs gemäß einem Ausführungsbeispiel der Erfindung;
- FIG.2: eine Seitenansicht des Gleitgewindetriebs aus FIG.1;
- FIG.3: einen Längsschnitt auf der Hauptachse von Spindel und Spindelmutter des Gleitgewindetriebs gemäß Schnittlinie III-III in FIG.2;
- FIG.4: einen Gewindequerschnitt der Spindelmutter entsprechend der Vergrößerung IV aus FIG.3.

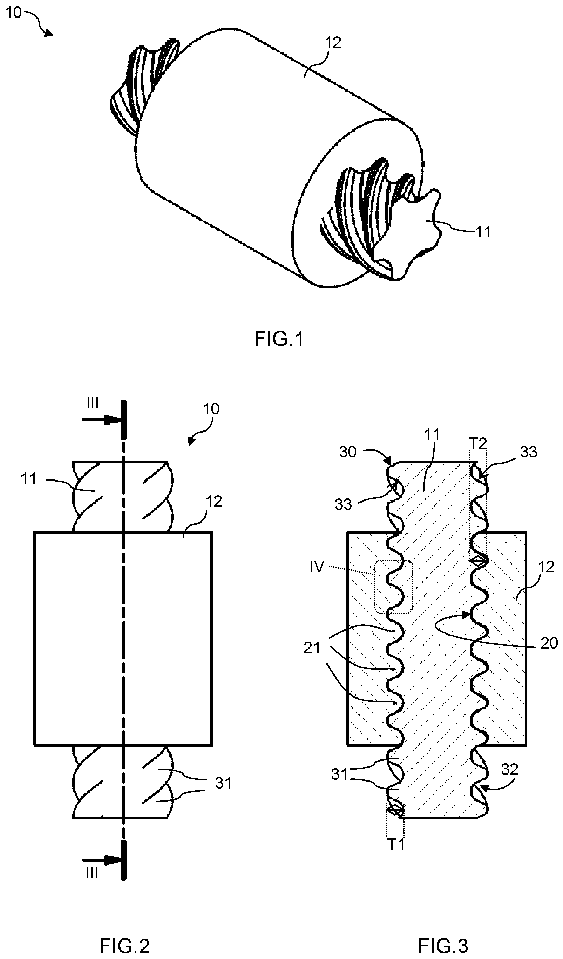

FIG.1-4 zeigen einen Gleitgewindetrieb 10 zur Umwandlung einer Rotation einer Spindel 11 in eine Längsbewegung einer Spindelmutter 12. Die Spindelmutter 12 ist einstückig aus Kunststoff durch Spritzguss gefertigt. Die Spindelmutter 12 besteht aus einem Hochleistungspolymer, insbesondere mit Füll- und/oder Verstärkungsstoffen zur Erzielung eines schmiermittelfreien und reibungsarmen Betriebs. Die Spindel 11 besteht aus nichtrostendem Cr-Ni-Stahl, welcher eine höhere Festigkeit im Vergleich zu technischem Kunststoff der Spindelmutter 12 aufweist. Das Außengewinde 30 der Spindel 11 ist beispielsweise fünfgängig, **d.h.** hat fünf Gewindewendeln 31. Das Innengewinde 20 der Spindelmutter 12 hat entsprechend auch fünf Gewindewendeln 31 der Spindel 11 an ihren Scheiteln mit etwa dem Radius R2 ebenfalls durchgehend gerundet.

Wie am besten aus FIG.3-4 ersichtlich, sind das Innengewinde 20 und das Außengewinde 30 relativ zueinander asymmetrisch ausgeführt, denn die Gewindewendeln 21 der Spindelmutter 12 sind deutlich grösser dimensioniert als die Gewindewendeln 31 der Spindel 11. Entsprechend konjugiert bzw. komplementär verhalten sich die Gewinderille bzw. der Gewindegang 22 des Innengewindes 20 und der Gewindegang 22 des Außengewindes 30, denn die Gewindewendeln 21 der Spindelmutter 12 stehen im Eingriff mit den Gewindegängen 32 der Spindel 11 und umgekehrt.

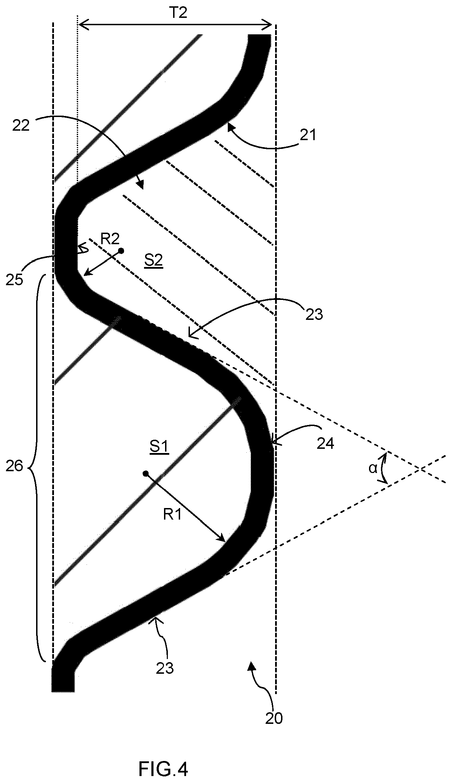

Wie näher aus FIG.4, einer Vergrößerung des Gewindequerschnitts des Innengewindes 20 der Spindelmutter 12, zu entnehmen, hat das Innengewinde 20 einen Gewindequerschnitt, in welchem Profilschnittfläche S1 (grob schraffiert) der Gewindewendel 21 um einen Faktor von hier etwa 1,28-1,32 grösser ist, als die freie Gangschnittfläche S2 (fein schraffiert) des Gewindegangs 22, d.h. der Gewinderille der Spindelmutter 12. Somit erfüllt der Quotient S1/S2 in diesem Beispiel die Ungleichung: 1,28 ≤ S1/S2 ≤ 1,32 (wobei je nach Baugröße bei der Angabe eine Mess- bzw. Herstellungstoleranz von im Bereich von etwa 1-5% angenommen werden kann).

Die Profilschnittfläche S1 und die Gangschnittfläche S2 sind hierbei die im Profilschnitt entsprechend FIG.4 gemessenen Flächen zwischen den gestrichelten Parallelen zur Längsachse, wobei eine Parallele (links in FIG.4) durch den Gewindefuß 26 verläuft bzw. eine Tangente zu den Rillengründen 25 bildet und die andere Parallele eine Tangente zu den Scheiteln 24 bildet.

Anhand der spürbar größeren Abmessung der Gewindewendeln 21 der Spindelmutter 12 im Vergleich zu den Gewindewendeln 31 der Spindel 11 kann eine deutlich höhere Axiallast bei gleich starkem Kunststoff aufgenommen werden, bzw. es kann Kunststoff eingesetzt werden, wo bisher Spindelmuttern aus Metall nötig werden. Dieser Effekt wird synergetisch verstärkt, insbesondere bei großen Gewindesteigungen, dadurch, dass sich mehrgängige Innengewinde, in FIG.1-4 bspw. ein fünfgängiges Innengewinde 20, mit Kunststoff, insbesondere im Spritzguss deutlich leichter oder ggf. überhaupt erst herstellen lassen.

Wie aus FIG.4 ersichtlich sind bei der Spindelmutter 12 die Übergänge von Flanke 23 zu Gewindescheitel 24 und von Flanke 23 zu Rillengrund 25 gerundet zur Vibrationsverringerung. Der Gewindescheitel 24 ist bevorzugt zwischen den Flanken 23 durchgehend (im Profilschnitt kreisrund) gerundet, vorzugsweise mit einem Rundungsradius R1, beispielsweise etwa R1≈1,6mm bei einem 5-gängigen Gewinde mit 25mm Steigung (und 6,35mm Nenndurchmesser), d.h. R1 entspricht dem 0,32-fachen Wert von 1/5 der Gewindesteigung (entsprechend 5mm axialer Baulänge von Gewindewendel plus Gewindegang). Auch der Übergang von jeder Flanke 23 zum Rillengrund 25 ist gerundet mit einem Rundungsradius R2, wobei R2<<R1. Entsprechend ist auch der Profilschnitt der Spindel 11 bevorzugt an beiden Übergängen mit Rundungen versehen. Besonders bevorzugt ist demnach eine Ausführung mit einem Profil ähnlich einem Rundgewinde, **d.h.** gänzlich ohne Kanten.

Grundsätzlich laufen im Betrieb nur die wendelförmigen Flächen der Flanken 23, 33 gleitend aufeinander. Um bei unerwünschtem Schräglauf oder Beschädigung einen beidseitigen Kontakt bzw. hieraus entstehende Eigenschwingung zu vermeiden, ist die Gewindetiefe T1 des Außengewindes 30 der Spindel 11 leicht grösser als die Gewindetiefe T2 des Innengewindes 20 der Spindelmutter 12. So entsteht ein wendelförmiger Linienkontakt höchstens zwischen den Scheiteln am Außengewinde 30 und dem jeweiligen Rillengrund 25 des Innengewindes 20.

Die gegenüberliegenden Flanken 23, 33 sind beim Innengewinde 20 und beim Außengewinde 30 jeweils spiegelsymmetrisch bzgl. einer gedachten Radialebene durch den Profilschnitt in FIG.3-4 ausgeführt. Sie schließen einen für Bewegungsgewinde unüblich großen Flankenwinkel α ein, im Beispiel nach FIG.1-4 von etwa 50-60°. Aufgrund der Kunststoffeigenschaften und der guten Belastbarkeit der Gewindewendeln 21 des Innengewindes 20 können derart große Flankenwinkel α realisiert werden.

Es bleibt anzumerken, dass die Spindelmutter 12 anders als in FIG.1-3 gezeigt ausgeführt sein kann, insbesondere als Flanschgewindemutter.

### Bezugszeichenliste

### FIG.1-4:

- 10: Gleitgewindetrieb
- 11: Spindel
- 12: Spindelmutter
- 20: Innengewinde bzw. Muttergewinde
- 21: Gewindewendel (Innengewinde)
- 22: Gewindegang (Innengewinde)
- 23: Flanke
- 24: Scheitel
- 25: Rillengrund
- 26: Gewindefuß

- 30: Außengewinde bzw. Spindelgewinde
- 31: Gewindewendel (Außengewinde)
- 32: Gewindegang (Außengewinde)
- 33: Flanke

- α: Flankenwinkel
- R1: Radius (am Scheitel)
- R2: Radius (am Rillengrund)
- S1: Profilschnittfläche
- S2: Gangschnittfläche
- T1: Gewindetiefe (Spindel)
- T2: Gewindetiefe (Spindelmutter)

## Patentansprüche

1. Gleitgewindetrieb (10) zur Umsetzung einer Drehbewegung in eine Längsbewegung oder umgekehrt, mit einer Spindel (11) und einer Spindelmutter (12),
wobei zumindest das Innengewinde (20) der Spindelmutter oder die gesamte Spindelmutter (12) aus Kunststoff gefertigt ist, und das Außengewinde (30) der Spindel eine höhere Festigkeit aufweist als das Innengewinde (20) der Spindelmutter,
wobei das Innengewinde (20) der Spindelmutter (12) einen Gewindequerschnitt bzw. Profilschnitt aufweist, mit einer zum Eingriff in den Gewindegang (32) der Spindel bestimmten ersten Profilschnittfläche (S1) der Gewindewendel (21) der Spindelmutter (12),
wobei das Außengewinde (30) der Spindel (11) einen Gewindequerschnitt bzw. Profilschnitt aufweist, mit einer zum Eingriff in den Gewindegang (22) der Spindelmutter bestimmten zweiten Profilschnittfläche (S2) der Gewindewendel (31) der Spindel (11),
wobei Innengewinde (20) und Außengewinde (30) zueinander asymmetrisch ausgeführt sind,
wobei die erste Profilschnittfläche (S1) der Gewindewendel (21) der Spindelmutter (12) grösser ist als die zweite Profilschnittfläche (S2) der Gewindewendel (31) der Spindel (11),
**dadurch gekennzeichnet,**
- **dass** die Spindel (11) und die Spindelmutter (12) jeweils mehrgängig ausgeführt sind, insbesondere mit jeweils mindestens drei Gewindewendeln, vorzugsweise mit jeweils mindestens fünf Gewindewendeln.

2. Gleitgewindetrieb nach Anspruch 1, **dadurch gekennzeichnet, dass**
- die erste Profilschnittfläche (S1) der Gewindewendel (21) der Spindelmutter (12) um einen Faktor von mindestens 1,2 grösser ist als die zweite Profilschnittfläche (S2) der Gewindewendel (31) der Spindel (11); und/oder
- der Quotient von erster Profilschnittfläche (S1) zu zweiter Profilschnittfläche (S2) einen Wert im Bereich von 1,2 bis 2, insbesondere im Bereich von 1,25 bis 1,4, aufweist; und/oder
- die Gewindewendel (21) der Spindelmutter (12) um ca. 10-35% breiter als bei symmetrischer Ausführung und der Gewindegang (22) der Spindelmutter (12) um ca. 10-35% schmaler als bei symmetrischer Ausführung gestaltet sind, und dass die Gewindewendel (31) der Spindel (11) um ca. 10-35% schmaler als bei symmetrischer Ausführung und der Gewindegang (32) der Spindel (11) um ca. 10-35% breiter als bei symmetrischer Ausführung gestaltet sind.

3. Gleitgewindetrieb nach Anspruch 1 oder 2, **dadurch gekennzeichnet, dass**
- im Profilschnitt des Innengewindes (20) der Spindelmutter (12) die Übergänge von Flanke (23) zu Gewindescheitel (24) gerundet sind; und/oder
- im Profilschnitt des Außengewindes (30) der Spindel (11) die Übergänge von Flanke (33) zu Gewindescheitel gerundet sind.

4. Gleitgewindetrieb nach Anspruch 1, 2 oder 3, **dadurch gekennzeichnet, dass** die Spindelmutter (12) und/oder die Spindel (11) einen Profilschnitt aufweist, dessen Gewindescheitel (24) zwischen den Flanken (23) durchgehend gerundet sind.

5. Gleitgewindetrieb nach Anspruch 4, **dadurch gekennzeichnet, dass** die Gewindescheitel (24) zwischen den Flanken (23) entsprechend einem Rundungsradius (R1), vorzugsweise im Bereich vom 0,1-fachen bis 0,5-fachen Wert des Quotienten aus Gewindesteigung und Anzahl der Gewindegänge, durchgehend gerundet sind.

6. Gleitgewindetrieb nach einem der vorhergehenden Ansprüche, **dadurch gekennzeichnet, dass**
- die Profilschnittflächen (S1, S2) Schnittflächen betrachtet in einem Längsschnitt durch die zentrale Längsachse der Spindelmutter bzw. der Spindel sind, und/oder
- die zweite Profilschnittfläche (S2) der Gewindewendel (31) der Spindel (11) der freien Gangschnittfläche des Gewindegangs (22) der Spindelmutter entspricht, in welche die Gewindewendel (31) der Spindel (11) eingreift.

7. Gleitgewindetrieb nach einem der vorhergehenden Ansprüche, **dadurch gekennzeichnet,**
- **dass** die Spindelmutter (12) einstückig hergestellt ist, insbesondere vollständig im Spritzgussverfahren oder durch spanendes Bearbeiten eines einstückigen Rohlings, wobei die Spindelmutter (12) vorzugsweise aus einem spritzgussfähigen und schmierfreien Hochleistungspolymer, insbesondere mit Füll- und/oder Verstärkungsstoffen, besteht; und/oder
- **dass** die Spindel (11) vollständig aus Metall, insbesondere aus einem nichtrostenden Cr-Ni-Stahl oder aus Aluminium gefertigt ist.

8. Gleitgewindetrieb nach einem der vorhergehenden Ansprüche, **dadurch gekennzeichnet, dass** im Profilschnitt des Innengewindes (20) der Spindelmutter (12) die gegenüberliegenden Flanken (23) spiegelsymmetrisch ausgeführt sind mit einem Flankenwinkel (α) für Bewegungsgewinde, insbesondere im Bereich von 30° bis 70°.

9. Gleitgewindetrieb nach einem der vorhergehenden Ansprüche, **dadurch gekennzeichnet, dass**
- Spindelmutter (12) und Spindel (11) mehrgängig mit einer Anzahl n Gewindegängen im Bereich von 3 ≤ n ≤ 20, insbesondere im Bereich von 5 ≤ n ≤ 20 ausgeführt sind; und/oder
- Spindelmutter (12) und Spindel (11) mit Nenndurchmesser und Steigung für eine Übersetzung im Bereich von 1:10 bis 2:1 ausgeführt sind.

## Claims

1. A lead screw drive (10) for converting a rotational movement into a longitudinal movement or vice-versa, comprising a spindle (11) and a spindle nut (12),
wherein at least the female thread (20) of the spindle nut or the entire spindle nut (12) is made from plastic and the male thread (30) of the spindle is of higher strength than the female thread (20) of the spindle nut,
wherein the female thread (20) of the spindle nut (12) has a thread cross-section or profile section, with a first profile sectional area (S1) of the thread helix (21) of the spindle nut (12) that is intended for engagement into the thread (32) of the spindle,
wherein the male thread (30) of the spindle (11) has a thread cross-section or profile section, with a second profile sectional area (S2) of the thread helix (31) of the spindle (11) that is intended for engagement into the thread (22) of the spindle nut,
wherein the female thread (20) and the male thread (30) are of an asymmetrical configuration relative to each other and
wherein the first profile sectional area (S1) of the thread helix (21) of the spindle nut (12) is greater than the second profile sectional area (S2) of the thread helix (31) of the spindle (11), **characterised in that**
the spindle (11) and the spindle nut (12) are both of multi-thread configuration, in particular with at least three thread helices each, preferably with at least five thread helices each.

2. A lead screw drive as set forth in claim 1 **characterised in that**
- the first profile sectional area (S1) of the thread helix (21) of the spindle nut (12) is greater by a factor of at least 1.2 than the second profile sectional area (S2) of the thread helix (31) of the spindle (11); and/or
- the quotient of the first profile sectional area (S1) to the second profile sectional area (S2) is of a value in the region of between 1.2 and 2, in particular in the region of between 1.25 and 1.4; and/or
- the thread helix (21) of the spindle nut (12) is configured to be approximately 10-35% wider than in a symmetrical design and the thread (22) of the spindle nut (12) is configured to be approximately 10-35% narrower than in a symmetrical design, and the thread helix (31) of the spindle (11) is configured to be 10-35% narrower than in a symmetrical design and the thread (32) of the spindle is configured to be approximately 10-35% wider than in a symmetrical design.

3. A lead screw drive as set forth in claim 1 or claim 2 **characterised in that**
- the transitions from the flank (23) to the thread apex (24) are rounded in the profile section of the female thread (20) of the spindle nut (12); and/or
- the transitions from the flank (33) to the thread apex are rounded in the profile section of the male thread (30) of the spindle (11).

4. A lead screw drive as set forth in claim 1, 2 or 3 **characterised in that** the spindle nut (12) and/or the spindle (11) have a profile section whose thread apexes (24) are continuously rounded between the flanks (23).

5. A lead screw drive as set forth in claim 4 **characterised in that** the thread apexes (24) between the flanks (23) are continuously rounded, corresponding to a rounding radius (R1), preferably in the region of between 0.1 times and 0.5 times the value of the quotient of the thread pitch and the number of threads.

6. A lead screw drive as set forth in in one of the preceding claims **characterised in that**
- the profile sectional areas (S1, S2) are sectional areas considered in a longitudinal section through the central longitudinal axis of the spindle nut or of the spindle, and/or
- the second profile sectional area (S2) of the thread helix (31) of the spindle (11) corresponds to the free thread sectional area of the thread helix (22) of the spindle nut into which the thread helix (31) of the spindle (11) engages.

7. A lead screw drive as set forth in one of the preceding claims **characterised in that**
- the spindle nut (12) is produced in one piece, in particular completely using an injection molding process or by cutting machining of a one-piece blank, wherein the spindle nut (12) preferably consists of an injection moldable and lubricant-free high-duty polymer, in particular with filling and/or reinforcing substances; and/or
- **in that** the spindle (11) is produced completely from metal, in particular a stainless Cr-Ni-steel or aluminum.

8. A lead screw drive as set forth in one of the preceding claims **characterised in that**, in the profile section of the female thread (20) of the spindle nut (12), the oppositely disposed flanks (23) are of mirror-image symmetrical configuration with a flank angle (α) for motion threads, in particular in the region of between 30° and 70°.

9. A lead screw drive as set forth in one of the preceding claims **characterised in that**
- the spindle nut (12) and the spindle (11) are of a multi-thread configuration with a number of n of threads in the region of 3 ≤ n ≤ 20, in particular in the region of 5 ≤ n ≤ 20;
and/or
- the spindle nut (12) and the spindle (11) are configured with a nominal diameter and pitch for conversion in the region of between 1:10 and 2:1.

## Revendications

1. Entrainement à vis coulissant (10) destiné à convertir un mouvement de rotation en un mouvement longitudinal ou inversement, comprenant une broche (11) et un écrou de broche (12),
dans lequel au moins le filetage intérieur (20) de l'écrou de broche ou l'écrou de broche (12) dans son ensemble est fabriqué en matière plastique et le filetage extérieur (30) de la broche présente une résistance mécanique supérieure à celle du filetage intérieur (20) de l'écrou de broche,
dans lequel le filetage intérieur (20) de l'écrou de broche (12) présente une section transversale de filetage ou une coupe de profil, avec une première surface de coupe de profil (S1) de la spire de filetage (21) de l'écrou de broche (12) destinée à s'engager dans le filet (32) de la broche,
dans lequel le filetage extérieur (30) de la broche (11) présente une section transversale de filetage ou une coupe de profil comportant une deuxième surface de coupe de profil (S2) de la spire de filetage (31) de la broche (11), destinée à s'engager dans le filet (22) de l'écrou de broche,
dans lequel le filetage intérieur (20) et le filetage extérieur (30) sont réalisés de manière asymétrique l'un par rapport à l'autre,
dans lequel la première surface de coupe de profil (S1) de la spire de filetage (21) de l'écrou de broche (12) est plus grande que la deuxième surface de coupe de profil (S2) de la spire de filetage (31) de la broche (11),
**caractérisé en ce que,**
- la broche (11) et l'écrou de broche (12) sont chacun à plusieurs filets, en particulier avec au moins trois filets chacun, de préférence avec au moins cinq filets chacun.

2. Entraînement à vis coulissant selon la revendication 1,
**caractérisé en ce que**
- la première surface de coupe de profil (S1) de la spire de filetage (21) de l'écrou de broche (12) est supérieure d'un facteur d'au moins 1,2 à la deuxième surface de coupe de profil (S2) de la spire de filetage (31) de la broche (11); et/ou
- le rapport entre la première surface de coupe de profil (S1) et la deuxième surface de coupe de profil (S2) présente une valeur comprise entre 1,2 et 2, en particulier entre 1,25 et 1,4; et/ou
- la spire de filetage (21) de l'écrou de broche (12) est plus large d'environ 10 à 35% que dans une version symétrique et le filet (22) de l'écrou de broche (12) est plus étroit d'environ 10 à 35% que dans une version symétrique, et **en ce que** les spires de filetage (31) de la broche (11) sont environ 10 à 35% plus étroites que dans une version symétrique et le filet (32) de la broche (11) est environ 10 à 35% plus large que dans une version symétrique.

3. Entraînement à vis coulissant selon la revendication 1 ou 2, **caractérisée en ce que**
- dans la coupe de profil du filetage intérieur (20) de l'écrou de broche (12), les transitions entre le flanc (23) et le sommet de filetage (24) sont arrondies; et/ou
- dans la coupe de profil du filetage extérieur (30) de la broche (11), les transitions entre le flanc (33) et le sommet de filetage sont arrondies.

4. Entraînement à vis coulissant selon la revendication 1, 2 ou 3, **caractérisé en ce que** l'écrou de broche (12) et/ou la broche (11) présente une coupe de profil dont le sommet de filetage (24) est arrondi de manière continue entre les flancs (23).

5. Entraînement à vis coulissant selon la revendication 4, **caractérisé en ce que** les sommets de filetage (24) entre les flancs (23) sont arrondis de manière continue selon un rayon de courbure (R1), de préférence compris entre 0,1 et 0,5 fois la valeur du quotient du pas de filetage et du nombre de filets.

6. Entraînement à vis coulissant selon l'une quelconque des revendications précédentes, **caractérisé en ce que**
- les surfaces de coupe de profil (S1, S2) sont des surfaces de coupe considérées dans une coupe longitudinale passant par l'axe longitudinal central de l'écrou de broche ou de la broche, et/ou
- la deuxième surface de coupe de profil (S2) du filet (31) de la broche (11) correspond à la surface de section libre du filet (22) de l'écrou de broche dans laquelle s'engage le filet (31) de la broche (11).

7. Entraînement à vis coulissant selon l'une quelconque des revendications précédentes, **caractérisé en ce que**
- l'écrou de broche (12) est fabriqué d'un seul tenant, en particulier entièrement par moulage par injection ou par usinage d'une ébauche monobloc, l'écrou de broche (12) étant de préférence constitué d'un polymère haute performance moulable par injection et sans lubrification, en particulier avec des charges et/ou des agents de renforcement; et/ou
- la broche (11) est entièrement fabriquée en métal, en particulier en acier inoxydable Cr-Ni ou en aluminium.

8. Entraînement à vis coulissant selon l'une quelconque des revendications précédentes, **caractérisé en ce que**, dans la coupe de profil du filetage intérieur (20) de l'écrou de broche (12), les flancs opposés (23) sont réalisés de manière symétrique par rapport à un plan de symétrie, avec un angle de flanc (α) pour des filetages de déplacement, en particulier compris entre 30° et 70°.

9. Entraînement à vis coulissant selon l'une quelconque des revendications précédentes, **caractérisé en ce que**
- l'écrou de broche (12) et la broche (11) sont à plusieurs filets avec un nombre n de filets compris entre 3 ≤ n ≤ 20, en particulier entre 5 ≤ n ≤ 20; et/ou
- l'écrou de broche (12) et la broche (11) sont réalisés avec un diamètre nominal et un pas permettant un rapport de transmission compris entre 1:10 et 2:1.
